# EUROPEAN PATENT SPECIFICATION

(11) **EP 2 872 452 B1**
(45) Date of publication and mention of the grant of the patent: **25.05.2016**
(21) Application number: 13739254.4
(22) Date of filing: 10.07.2013
(51) Int. Cl.: C01G 53/00

(54) **DOPED NICKELATE COMPOUNDS**
DOTIERTE NICKELATVERBINDUNGEN
COMPOSÉS NICKELATE DOPÉS

(30) Priority: 10.07.2012 GB 201212263
(43) Date of publication of application: 20.05.2015
(73) Proprietor: Faradion Ltd., Sheffield S1 4DP (GB)
(72) Inventor: BARKER, Jeremy, Chipping Norton, Oxfordshire OX7 6EH (GB); HEAP, Richard, Oxford, Oxfordshire OX2 9PT (GB)
(74) Representative: Bingham, Ian Mark
(86) International application number: PCT/GB2013/051824
(87) International publication number: WO 2014/009724

(56) References cited:
- EP-A1- 2 416 411
- WO-A1-2011/089958
- WO-A1-2011/102497
- US-A1- 2002 192 148
- US-A1- 2005 202 316
- US-A1- 2009 290 287
- SHINICHI KOMABA, WATARU MURATA, TORU ISHIKAWA, NAOAKI YABUUCHI, TOMOAKI OZEKI, TETSURI NAKAYAMA, ATSUSHI OGATA, KAZUMA GOTOH, KAZU: "Electrochemical Na Insertion and Solid Electrolyte Interphase for Hard-Carbon Electrodes and Application to Na-Ion Batteries", ADV. FUNCT. MATER., vol. 21, 11 August 2011 (2011-08-11), pages 3859-3867, XP002713387,

## Description

### FIELD OF THE INVENTION

The present invention relates to novel doped nickelate compounds, their method of preparation, to novel electrodes which utilise an active material that comprises said doped nickelate compounds, and to the use of these electrodes, for example in an energy storage device.

### BACKGROUND OF THE INVENTION

Sodium-ion batteries are analogous in many ways to the lithium-ion batteries that are in common use today; they are both reusable secondary batteries that comprise an anode (negative electrode), a cathode (positive electrode) and an electrolyte material, both are capable of storing energy, and they both charge and discharge via a similar reaction mechanism. When a sodium-ion (or lithium-ion battery) is charging, Na⁺ (or Li⁺) ions deintercalate from the cathode and insert into the anode. Meanwhile charge balancing electrons pass from the cathode through the external circuit containing the charger and into the anode of the battery. During discharge the same process occurs but in the opposite direction.

Lithium-ion battery technology has enjoyed a lot of attention in recent years and provides the preferred portable battery for most electronic devices in use today; however lithium is not a cheap metal to source and is considered too expensive for use in large scale applications. By contrast sodium-ion battery technology is still in its relative infancy but is seen as advantageous; sodium is much more abundant than lithium and some researchers predict this will provide a cheaper and more durable way to store energy into the future, particularly for large scale applications such as storing energy on the electrical grid. Nevertheless a lot of work has yet to be done before sodium-ion batteries are a commercial reality.

NaNi_{0.5}Mn_{0.5}O₂ is a known Na-ion material in which the nickel is present as Ni²⁺ while the manganese is present as Mn⁴⁺. The material is ordered with the Na and Ni atoms residing in discrete sites within the structure. The nickel ions (Ni²⁺) are a redox element which contributes to the reversible specific capacity; the manganese ions (Mn⁴⁺) play the role of a structure stabilizer. Compound NaNi_{0.5}Ti_{0.5}O₂ is analogous to NaNi_{0.5}Mn_{0.5}O₂ in that the Ni²⁺ ions provide the active redox centre and the Ti⁴⁺ ions are present for structure stabilization. There is plenty of literature describing the preparation of NaNi_{0.5}Mn_{0.5}O₂ (and to a lesser extent NaNi_{0.5}Ti_{0.5}O₂) as the precursor for making LiNi_{0.5}Mn_{0.5}O₂ and LiNi_{0.5}Ti_{0.5}O₂ by Na → Li ion exchange for Li-ion applications. A direct synthesis method to make these Li materials yields undesirable disordered materials, for example, as a result of the lithium and nickel atoms sharing structural sites.

Recent electrochemical studies reported by Komaba et al Adv. Funct. Mater. 2011, 21, 3859 describe the sodium insertion performance of hard-carbon and layered NaNi_{0.5}Mn_{0.5}O₂ electrodes in propylene carbonate electrolyte solutions. The results obtained show that although NaNi_{0.5}Mn_{0.5}O₂ exhibits some reversible charging and discharging ability, the capacity of the material fades by 25% or more, after only 40 cycles.

WO2011/089958 and its US family document US2012/092561 disclose compounds with formula Li_{b}Ni₁₋ₐM¹ₐO₂.

EP2416411 discloses the positive electrode active material for a lithium ion battery that is Liₓ(Ni_{y}M_{1-y})O_{z}, in which M is one or more selected from the group consisting of Mn, Co, Mg, Al, Ti, Cr, Fe, Cu and Zr, x is within the range of 0.9-1.2, y is within the range of 0.3-0.95 and z is within the range of 1.8-2.4.

US2002/192148 discloses the compounds LiₓNi_{1-y}M_{y}A₂ (formula 7) and LiₓNi_{1-y-z}Mn_{y}M_{z}A_{[alpha]} (formula 12).

US2005/0202316 discloses the compound LiₐNi_{b}Mn_{c}M_{d}O₂ (formula 1).

WO2011/102497 a lithium mixed metal oxide that is preferably represented by Li_{z}(Ni_{1-(x+y)}MnₓM_{y})O₂, wherein x is not less than 0.3 and less than 1, y is not less than 0 and less than 0.7, x + y is not less than 0.3 and less than 1, z is not less than 0.5 and not more than 1.5 and M represents one or more elements selected from the group consisting of Co, Al, Ti, Mg and Fe.

US2009/290287 discloses an aqueous or non-aqueous electrolyte for a negative electrode.

SHINICHI KOMABA, WATARU MURATA, TORU ISHIKAWA, NAOAKI YABUUCHI, TOMOAKI OZEKI, TETSURI NAKAYAMA, ATSUSHI OGATA, KAZUMA GOTOH, KAZU: "Electrochemical Na Insertion and Solid Electrolyte Interphase for Hard-Carbon Electrodes and Application to Na-lon Batteries", ADV. FUNCT. MATER., vol. 21, 11 August 2011 (2011-08-11), pages 3859-3867, discloses that lithium in active nickelate materials for electrodes in lithium-ion batteries may be replaced by sodium.

The present invention aims to provide novel compounds. Further the present invention aims to provide a cost effective electrode that contains an active material that is straightforward to manufacture and easy to handle and store. Another aim of the present invention is to provide an electrode that has a high initial specific discharge capacity and which is capable of being recharged multiple times without significant loss in charge capacity.

Therefore, the first aspect of the present invention provides compounds of the formula:

A_{1-δ}Ni_{0.5}M¹_{0.5-X}M²xO₂

wherein
A comprises one or more alkali metals selected from lithium, sodium and potassium;
M¹ and M² each comprise a metal in oxidation state +4 selected from one or more of manganese, titanium and zirconium;
wherein
   0≤δ≤0.1;
X is in the range 0 ≤ X < 0.5; and
further wherein when X = 0 then M¹ # Mn or Ti.

Preferably the present invention provides a compound of the above formula wherein X is in the range 0 ≤ X ≤ 0.45, and further preferably X is in the range 0.05≤ X ≤ 0.45. In further particularly preferred compounds, δ = 0.05.

As can be determined from the structure above, a notable feature of the compounds of the present invention is that the nickel is in oxidation state +2.

Although A is defined as comprising one or more alkali metals selected from lithium, sodium and potassium, compounds in which A is one or more alkali metals comprising sodium and/or potassium either alone or in a mixture with lithium as a minor constituent are also part of the present invention.

Particularly preferred compounds of the above formula include:

NaNi_{0.5}Mn_{0.25}Zr_{0.25}O₂;

NaNi_{0.5}Ti_{0.25}Zr_{0.25}O₂;

NaNi_{0.5}Mn_{0.25}Ti_{0.25}O₂;

NaNi_{0.5}Mn_{0.45}Zr_{0.05}O₂;

NaNi_{0.5}Mn_{0.4}Zr_{0.1}O₂;

NaNi_{0.5}Ti_{0.45}Zr_{0.05}O₂;

NaNi₀.₅Mn_{0.4}Zr_{0.1}O₂;

NaNi_{0.5}Mn_{0.225}Ti_{0.225}Zr_{0.05}O₂;

NaNi_{0.5}Mn_{0.2}Ti_{0.2}Zr_{0.1}O₂; and

NaNi_{0.5}Zr_{0.5}O₂.

In a second aspect, the present invention provides an electrode comprising an active compound of the formula:

A_{1-δ}Ni_{0.5}M¹_{0.5-X}M²_{X}O₂

wherein
A comprises one or more alkali metals selected from lithium, sodium and potassium;
M¹ and M² each comprise a metal in oxidation state +4 selected from one or more of manganese, titanium and zirconium;
further wherein
   0 ≤ δ ≤ 0.1
   X is in the range 0 ≤ X < 0.5;
   wherein when X = 0 then M¹ ≠ Mn or Ti.

Preferably the present invention provides an electrode comprising an active compound of the above formula wherein X is in the range 0 ≤ X ≤ 0.45, and further preferably X is in the range 0.05≤ X ≤ 0.45.

As can be determined from the above structure, the nickel is in oxidation state +2.

The Applicant has observed that if NiO is present as an impurity phase in samples of the active compounds, then this has a detrimental effect on the electrochemical performance. NiO may be formed during the process of charging the electrode; at this time Ni2+ can be oxidized, using up energy that would normally be used to charge the active material. This is not only an irreversible reaction, but also has a detrimental effect on the cycling performance, resulting in a drop in capacity upon electrochemical cycling. The formation of NiO by this route is found to be minimised by reducing the amount of alkali metal in the active compound and is the purpose for compounds of the invention which have less than 1 unit of alkali metal.

Electrodes comprising active compounds of the above formula in which δ=0.05, are highly beneficial.

Although A is defined as comprising one or more alkali metals selected from lithium, sodium and potassium, compounds in which A is one or more alkali metals comprising sodium and/or potassium either alone or in a mixture with lithium as a minor constituent are also electrochemically effective.

Especially preferred electrodes comprise active compounds selected from one or more of:

NaNi_{0.5}Mn_{0.25}Zr_{0.25}O₂;

NaNi_{0.5}Ti_{0.25}Zr_{0.25}O₂;

NaNi_{0.5}Mn_{0.25}Ti_{0.25}O₂;

NaNi_{0.5}Mn_{0.45}Zr_{0.05}O_{2;}

NaNi_{0.5}Mn_{0.4}Zr_{0.1}O₂;

NaNi_{0.5}Ti_{0.45}Zr_{0.05}O₂;

NaNi_{0.5}Mn₀.₄Zr_{0.1}O₂;

NaNi_{0.5}Mn_{0.225}Ti_{0.225}Zr_{0.05}O₂;

NaNi_{0.5}Mn_{0.2}Ti_{0.2}Zr_{0.1}O₂; and

NaNi_{0.5}Zr_{0.5}O₂.

The electrodes according to the present invention are suitable for use in many different applications, for example energy storage devices, rechargeable batteries, electrochemical devices and electrochromic devices.

Advantageously, the electrodes according to the invention are used in conjunction with a counter electrode and one or more electrolyte materials. The electrolyte materials may be any conventional or known materials and may comprise either aqueous electrolyte(s) or non-aqueous electrolyte(s) or mixtures thereof.

In a third aspect, the present invention provides an energy storage device that utilises an electrode comprising the active materials described above, and particularly an energy storage device for use as one or more of the following: a sodium ion and/or lithium ion and/or potassium ion cell; a sodium metal and/ or lithium metal and/or potassium metal ion cell; a non-aqueous electrolyte sodium ion and/or lithium ion and/or potassium ion cell; and an aqueous electrolyte sodium ion and/or lithium ion and/or potassium ion cell.

The novel compounds of the present invention may be prepared using any known and/or convenient method. For example, the precursor materials may be heated in a furnace so as to facilitate a solid state reaction process.

A fourth aspect of the present invention provides a particularly advantageous method for the preparation of the compounds described above comprising the steps of:
a) mixing the starting materials together, preferably intimately mixing the starting materials together and further preferably pressing the mixed starting materials into a pellet;
b) heating the mixed starting materials in a furnace at a temperature of between 400°C and 1500°C, preferably a temperature of between 500°C and 1200°C, for between 2 and 20 hours; and
c) allowing the reaction product to cool.

Preferably the reaction is conducted under an atmosphere of ambient air, and alternatively under an inert gas.

It is also possible to prepare lithium-ion materials from the sodium-ion derivatives by converting the sodium-ion materials into lithium-ion materials using an ion exchange process.

Typical ways to achieve Na to Li ion exchange include:
1. Mixing the sodium-ion rich material with an excess of a lithium-ion material e.g. LiNO₃, heating to above the melting point of LiNO₃ (264°C), cooling and then washing to remove the excess LiNO₃ and side-reaction products.
2. Treating the Na-ion rich material with an aqueous solution of lithium salts, for example 1M LiCl in water; and
3. Treating the Na-ion rich material with a non-aqueous solution of lithium salts, for example LiBr in one or more aliphatic alcohols such as hexanol, propanol etc.

### BRIEF DESCRIPTION OF THE DRAWINGS

The present invention will now be described with reference to the following figures in which:
FIGURE 1 is an XRD of prior art material NaNi_{0.5}Mn_{0.5}O₂, prepared according to Example 1;
FIGURE 2 is an XRD of prior art material NaNi_{0.5}Ti_{0.5}O₂, prepared according to Example 2;
FIGURE 3 is an XRD of NaNi_{0.5}Mn_{0.25}Ti_{0.25}O₂ according to the present invention and prepared according to Example 3;
FIGURE 4 shows the Third Cycle Discharge Voltage Profile (Na-ion Cell Voltage [V] versus Cathode Specific Capacity [mAh/g]) for a Hard Carbon//NaNi_{0.5}Mn_{0.25}Ti_{0.25}O₂ Cell;
FIGURE 5 shows the Third Cycle Differential Capacity Profiles (Differential Capacity [mAh/g/V] versus Na-ion Cell Voltage [V]) for a Hard Carbon// NaNi_{0.5}Mn_{0.25}Ti_{0.25}O₂ Cell;
FIGURE 6 shows the Charge-Discharge Voltage Profiles for first 4 cycles (Na-ion Cell Voltage [V] versus Cumulative Cathode Specific Capacity [mAh/g]) for a Hard Carbon// NaNi_{0.5}Mn_{0.25}Ti_{0.25}O₂ Cell.
FIGURE 7 shows the Cycle Life Performance (Cathode Specific Capacity [mAh/g] versus Cycle Number) for a Hard Carbon// NaNi_{0.5}Mn_{0.25}Ti_{0.25}O₂ Cell.

### DETAILED DESCRIPTION

The materials according to the present invention are prepared using the following generic method:

### Generic Synthesis Method:

Stoichiometric amounts of the precursor materials are intimately mixed together and pressed into a pellet. The resulting mixture is then heated in a tube furnace or a chamber furnace using either an ambient air atmosphere, or a flowing inert atmosphere (e.g. argon or nitrogen), at a furnace temperature of between 400°C and 1500°C, using a single or multiple heating steps, until reaction product forms. When cool, the reaction product is removed from the furnace and ground into a powder.

The above method was used to prepare a number of doped nickelates, Examples 1 to 3, as summarised below in Table 1:

**TABLE 1**

| **EXAMPLE** | **TARGET COMPOUND** | **STARTING MATERIALS** | **FURNACE CONDITIONS** |
|---|---|---|---|
| 1 | NaNi_{0.5}Mn_{0.5}O₂ | Na₂CO₃, | 1)Air/700°C, dwell time of 8 hours. |
| | | NiCO₃. | |
| | | MnO₂ | |
| | Prior art | | |
| | | | 2) Air/900°C, dwell time of 8 hours. |
| 2 | NaNi_{0.5}Ti_{0.5}O₂ | Na₂CO₃ | 1)Air/700°C, dwell time of 8 hours. |
| | | NiCO₃ | |
| | | TiO₂ | |
| | Prior art | | 2) Air/900°C, dwell time of 8 hours. |
| 3 | NaNi_{0.5}Mn_{0.25}Ti_{0.25}O₂ | Na₂CO₃ | 1) Air/900°C, dwell time of 8 hours |
| | | NiCO₃ | |
| | | TiO₂ | |
| | | MnO₂ | |
| | | | 2) Air/1000°C, dwell time of 8 hours. |

### Product Analysis using XRD

All of the product materials were analysed by X-ray diffraction techniques using a Siemens D5000 powder diffractometer to confirm that the desired target materials had been prepared, to establish the phase purity of the product material and to determine the types of impurities present. From this information it is possible to determine the unit cell lattice parameters.

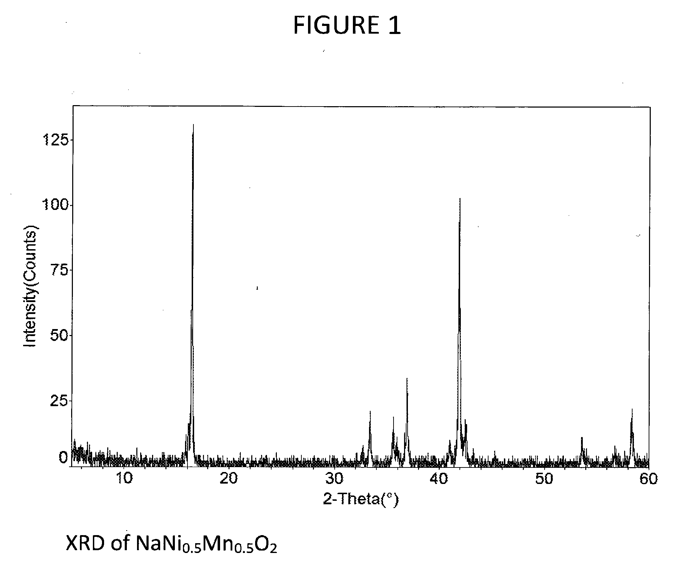

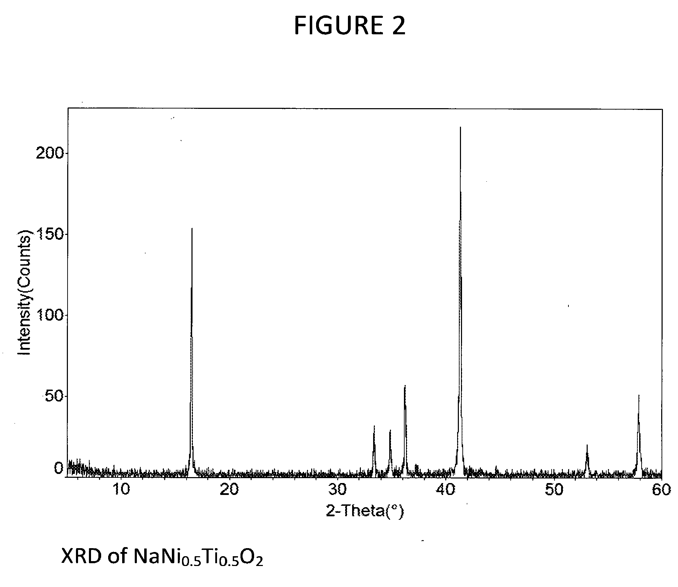

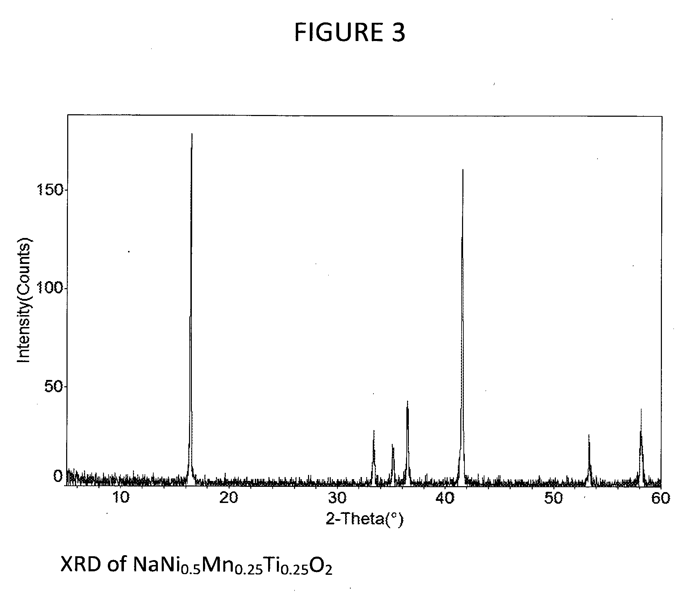

The operating conditions used to obtain the XRD spectra illustrated in Figures 1, 2 and 3 are as follows:
Slits sizes: 1 mm, 1 mm, 0.1 mm
Range: 20 = 5 ° - 60 °
X-ray Wavelength = 1.5418 A (Angstoms) (Cu Kα)
Speed: 0.5 seconds/step
Increment: 0.015°

### Electrochemical Results

The target materials were tested either i) using a lithium metal anode test cell, or ii) using a Na-ion test cell using a hard carbon anode. It is also possible to test using a Li-ion cell with a graphite anode. Cells may be made using the following procedures:

### Generic Procedure to Make a Lithium Metal Electrochemical Test Cell

The positive electrode is prepared by solvent-casting a slurry of the active material, conductive carbon, binder and solvent. The conductive carbon used is Super P (Timcal). PVdF co-polymer (e.g. Kynar Flex 2801, Elf Atochem Inc.) is used as the binder, and acetone is employed as the solvent. The slurry is then cast onto glass and a free-standing electrode film is formed as the solvent evaporates. The electrode is then dried further at about 80°C. The electrode film contains the following components, expressed in percent by weight: 80% active material, 8% Super P carbon, and 12% Kynar 2801 binder. Optionally, an aluminium current collector may be used to contact the positive electrode. Metallic lithium on a copper current collector may be employed as the negative electrode. The electrolyte comprises one of the following: (i) a 1 M solution of LiPF₆ in ethylene carbonate (EC) and dimethyl carbonate (DMC) in a weight ratio of 1:1; (ii) a 1 M solution of LiPF₆ in ethylene carbonate (EC) and diethyl carbonate (DEC) in a weight ratio of 1:1; or (iii) a 1 M solution of LiPF₆ in propylene carbonate (PC) A glass fibre separator (Whatman, GF/A) or a porous polypropylene separator (e.g. Celgard 2400) wetted by the electrolyte is interposed between the positive and negative electrodes.

### Generic Procedure to Make a Hard Carbon Na-ion Cell

The positive electrode is prepared by solvent-casting a slurry of the active material, conductive carbon, binder and solvent. The conductive carbon used is Super P (Timcal). PVdF co-polymer (e.g. Kynar Flex 2801, Elf Atochem Inc.) is used as the binder, and acetone is employed as the solvent. The slurry is then cast onto glass and a free-standing electrode film is formed as the solvent evaporates. The electrode is then dried further at about 80°C. The electrode film contains the following components, expressed in percent by weight: 80% active material, 8% Super P carbon, and 12% Kynar 2801 binder. Optionally, an aluminium current collector may be used to contact the positive electrode.

The negative electrode is prepared by solvent-casting a slurry of the hard carbon active material (Carbotron P/J, supplied by Kureha), conductive carbon, binder and solvent. The conductive carbon used is Super P (Timcal). PVdF co-polymer (e.g. Kynar Flex 2801, Elf Atochem Inc.) is used as the binder, and acetone is employed as the solvent. The slurry is then cast onto glass and a free-standing electrode film is formed as the solvent evaporates. The electrode is then dried further at about 80°C. The electrode film contains the following components, expressed in percent by weight: 84% active material, 4% Super P carbon, and 12% Kynar 2801 binder. Optionally, a copper current collector may be used to contact the negative electrode.

### Generic Procedure to Make a Graphite Li-ion Cell

The positive electrode is prepared by solvent-casting a slurry of the active material, conductive carbon, binder and solvent. The conductive carbon used is Super P (Timcal). PVdF co-polymer (e.g. Kynar Flex 2801, Elf Atochem Inc.) is used as the binder, and acetone is employed as the solvent. The slurry is then cast onto glass and a free-standing electrode film is formed as the solvent evaporates. The electrode is then dried further at about 80°C. The electrode film contains the following components, expressed in percent by weight: 80% active material, 8% Super P carbon, and 12% Kynar 2801 binder. Optionally, an aluminium current collector may be used to contact the positive electrode.

The negative electrode is prepared by solvent-casting a slurry of the graphite active material (Crystalline Graphite, supplied by Conoco Inc.), conductive carbon, binder and solvent. The conductive carbon used is Super P (Timcal). PVdF co-polymer (e.g. Kynar Flex 2801, Elf Atochem Inc.) is used as the binder, and acetone is employed as the solvent. The slurry is then cast onto glass and a free-standing electrode film is formed as the solvent evaporates. The electrode is then dried further at about 80°C. The electrode film contains the following components, expressed in percent by weight: 92% active material, 2% Super P carbon, and 6% Kynar 2801 binder. Optionally, a copper current collector may be used to contact the negative electrode.

### Cell Testing

The cells are tested as follows using Constant Current Cycling techniques.

The cell is cycled at a given current density between pre-set voltage limits. A commercial battery cycler from Maccor Inc. (Tulsa, OK, USA) is used. On charge, sodium (lithium) ions are extracted from the active material. During discharge, sodium (lithium) ions are re-inserted into the active material.

### Results:

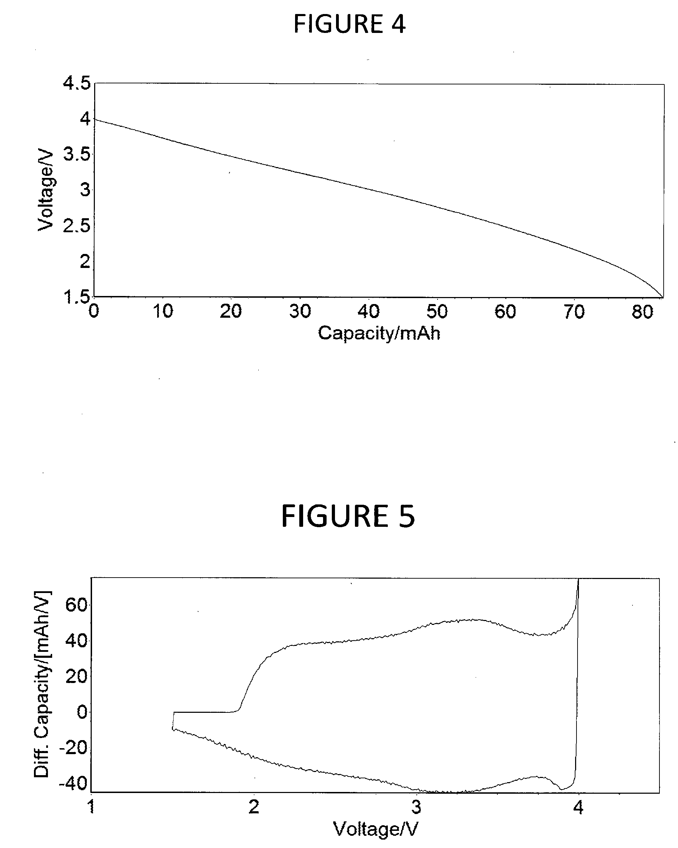

The data shown in Figures 4 to 7 are derived from the constant current cycling data for a NaNi_{0.50}Mn_{0.25}Ti_{0.25}O₂ active material in a Na-ion cell where this cathode material was coupled with a Hard Carbon (Carbotron P/J) anode material. The electrolyte used is a 0.5 M solution of NaClO₄ in propylene carbonate. The constant current data were collected at an approximate current density of 0.10 mA/cm² between voltage limits of 1.50 and 4.00 V. To ensure the Na-ion cell was fully charged the cell was potentiostatically held at 4.0 V at the end of the constant current charging process, until the current density dropped to 20% of the constant current value. The testing was carried out at room temperature. During the cell charging process, sodium ions are extracted from the cathode active material, and inserted into the Hard Carbon anode. During the subsequent discharge process, sodium ions are extracted from the Hard Carbon and re-inserted into the cathode active material.

Looking in detail, Figure 4 shows the third cycle discharge voltage profile (Na-ion Cell Voltage [V] versus Cathode Specific Capacity [mAh/g]) for the Hard Carbon//NaNi_{0.50}Mn_{0.25}Ti_{0.25}O₂ cell. The cathode specific capacity in this cycle corresponds to 83 mAh/g.

Figure 5 shows the third cycle differential capacity profiles (Differential Capacity [mAh/g/V] versus Na-ion Cell Voltage [V]) for the Hard Carbon//NaNi_{0.50}Mn_{0.25}Ti_{0.25}O₂ cell. These symmetrical data demonstrate the excellent reversibility of the ion extraction-insertion reactions in this Na-ion cell.

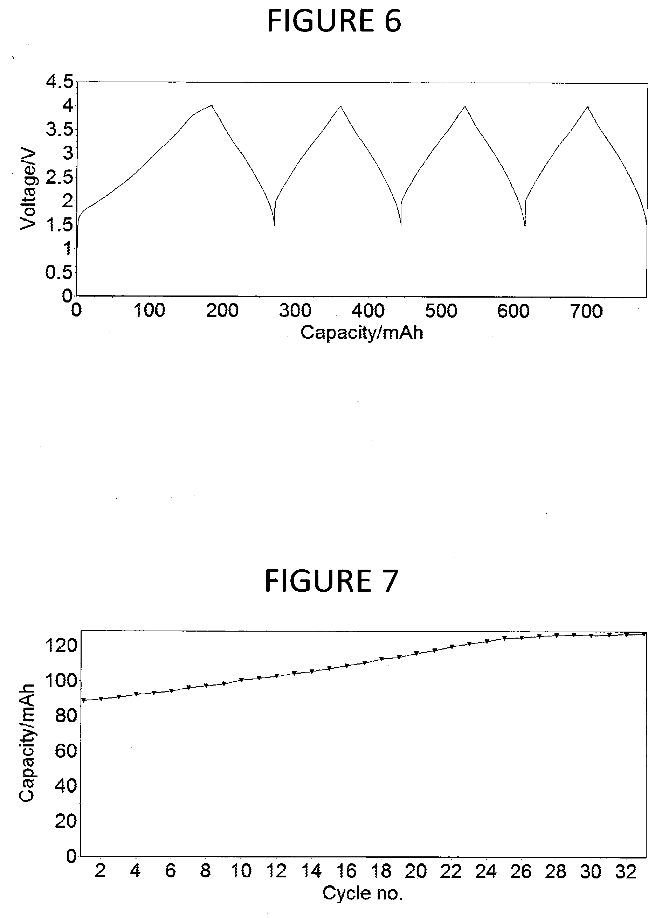

Figure 6 shows the first four charge-discharge cycles (Na-ion Cell Voltage [V] versus Cumulative Cathode Specific Capacity [mAh/g]) for the Hard Carbon// NaNi_{0.50}Mn_{0.25}Ti_{0.25}O₂ cell. These data demonstrate that the level of voltage hysteresis (i.e. the voltage difference between the charge and discharge processes) is extremely small, indicating the excellent kinetics of the extraction-insertion reactions.

Finally, Figure 7 shows the cycle life performance (Cathode Specific Capacity [mAh/g] versus Cycle Number) for the Hard Carbon// NaNi_{0.50}Mn_{0.25}Ti_{0.25}O₂ cell. The cell shows excellent reversibility with the delivered cathode specific capacity increasing over the first 33 cycles. The cathode specific capacity reaches around 127 mAh/g after 33 cycles.

## Claims

1. A compound of the formula:
A_{1-δ}Ni_{0.5}M¹_{0.5-X}M²_{X}O₂
wherein
A comprises one or more alkali metals selected from lithium, sodium and potassium;
M¹ and M² each comprise a metal in oxidation state +4 selected from one or more of manganese, titanium and zirconium;
wherein
0 ≤ δ ≤ 0.1
X is in the range 0 ≤ X < 0.5; and
further wherein when X = 0 then M¹ ≠ Mn or Ti.

2. A compound according to claim 1 wherein X is in the range 0 ≤ X ≤ 0.45.

3. A compound according to claim 1 wherein X is in the range 0.05 ≤ X ≤ 0.45.

4. A compound according to claim1 wherein δ=0.05.

5. A compound according to claim 1 of the formula: NaNi_{0.5}Mn_{0.25}Zr_{0.25}O₂; NaNi_{0.5}Ti_{0.25}Zr_{0.25}O₂; NaNi_{0.5}Mn_{0.25}Ti_{0.25}O₂; NaNi_{0.5}Mn_{0.45}Zr_{0.05}O₂; NaNi_{0.5}Mn_{0.4}Zr_{0.1}O₂; NaNi_{0.5}Ti_{0.45}Zr_{0.05}O₂; NaNi_{0.5}Mn_{0.4}Zr_{0.1}O₂; NaNi_{0.5}Mn_{0.225}Ti_{0.225}Zr_{0.05}O₂; NaNi_{0.5}Mn_{0.2}Ti_{0.2}Zr_{0.1}O₂; or NaNi_{0.5}Zr_{0.5}O₂.

6. An electrode comprising an active compound according to claim 1.

7. An electrode according to claim 6 used in conjunction with a counter electrode and one or more electrolyte materials.

8. An electrode according to claim 7 wherein the electrolyte material comprises an aqueous electrolyte material.

9. An electrode according to claim 7 wherein the electrolyte material comprises a non-aqueous electrolyte.

10. An energy storage device comprising an electrode according to claim 6.

11. An energy storage device according to claim 10 suitable for use as one or more of the following: a sodium ion and/or lithium ion and/or potassium ion cell; a sodium metal and/ or lithium metal and/or potassium metal ion cell; a non-aqueous electrolyte sodium ion and/or lithium ion and/or potassium ion cell; and an aqueous electrolyte sodium ion and/or lithium ion and/or potassium ion cell.

12. A rechargeable battery comprising an electrode according to claim 6.

13. An electrochemical device comprising an electrode according to claim 6.

14. An electrochromic device comprising an electrode according to claim 6.

15. A method of preparing the compounds according to claim 1 comprising the steps of:
a) mixing the starting materials together;
b) heating the mixed starting materials in a furnace at a temperature of between 400°C and 1500°C, for between 2 and 20 hours; and
c) allowing the reaction product to cool.

## Patentansprüche

1. Stoff der Formel:
A_{1-δ}Ni_{0.5}M¹_{0.5-X}M²_{X}O₂,
worin
A eines oder mehrere Alkalimetalle umfasst, ausgewählt aus Lithium, Natrium und Kalium,
M¹ und M² umfassen je ein Metall in der Oxidationsstufe +4, ausgewählt aus einem oder
mehreren der Metalle Mangan, Titan und Zirconium;
worin
0 ≤ δ ≤ 0.1 ist;
X im Bereich zwischen 0 ≤ X ≤ 0.5 liegt;
und wobei weiter gilt wenn X = 0, dann M¹ ≠ Mn oder Ti.

2. Stoff gemäß Anspruch 1, worin X im Bereich zwischen 0 ≤ X ≤ 0.45 liegt.

3. Stoff nach Anspruch 1, worin X im Bereich zwischen 0.05 ≤ X ≤ 0.45 liegt.

4. Stoff gemäß Anspruch 1, worin δ = 0.05.

5. Stoff gemäß Anspruch 1 mit der Formel: NaNi_{0.5}Mn_{0.25}Zr_{0.25}O₂; NaNi_{0.5}Ti_{0.25}Zr_{0.25}O₂; NaNi_{0.5}Mn_{0.25}Ti_{0.25}O₂; NaNi_{0.5}Mn_{0.45}Zr_{0.05}O₂; NaNi_{0.5}Mn_{0.4}Zr_{0.1}O₂; NaNi_{0.5}Ti_{0.45}Zr_{0.05}O₂; NaNi_{0.5}Mn_{0.4}Zr_{0.1}O₂; NaNi_{0.5}Mn_{0.225}Ti_{0.225}Zr_{0.05}O₂; NaNi_{0.5}Mn_{0.2}Ti_{0.2}Zr_{0.1}O₂; oder NaNi_{0.5}Zr_{0.5}O₂.

6. Elektrode, umfassend einen aktiven Stoff gemäß Anspruch 1.

7. Elektrode gemäß Anspruch 6, verwendet mit einer Gegenelektrode und einem oder mehreren Elektrolytmaterialien.

8. Elektrode gemäß Anspruch 7, worin das Elektrolytmaterial wässriges Elektrolytmaterial umfasst.

9. Elektrode gemäß Anspruch 7, worin das Elektrolytmaterial einen nicht-wässrigen Elektrolyten umfasst.

10. Energiespeichermedium, umfassend eine Elektrode gemäß Anspruch 6.

11. Energiespeichermedium gemäß Anspruch 10, geeignet für eine oder mehrere der folgenden Verwendungen: eine Natriumionen- und/oder eine Lithiumionen- und/oder eine Kaliumionenzelle; eine Natriummetallionen- und/oder eine Lithiummetallionen- und/oder Kaliummetallionenzelle; eine nicht wässrige Elektrolyt- Natriumionen- und/oder Lithiumionen- und/oder Kaliumionenzelle; und eine wässrige Elektrolyt- Natriumionen- und/oder Lithiumionen- und/oder Kaliumionenzelle.

12. Wiederaufladbare Batterie, umfassend eine Elektrode gemäß Anspruch 6.

13. Elektrochemische Vorrichtung, umfassend eine Elektrode gemäß Anspruch 6.

14. Elektrochrome Vorrichtung, umfassend eine Elektrode gemäß Anspruch 6.

15. Verfahren zur Herstellung der Stoffe gemäß Anspruch 1, umfassend die folgenden Schritte:
a) Vermischen der Ausgangsmaterialien,
b) Erhitzen der vermischten Ausgangsmaterialien in einem Ofen bei einer Temperatur zwischen 400°C und 1500°C, für 2 bis 20 Stunden; und
c) Abkühlen der Reaktionsprodukte.

## Revendications

1. Composé de formule :
A_{1-δ}Ni_{0,5}M¹_{0,5-X}M²_{X}O₂
dans laquelle
A comprend un ou plusieurs métaux alcalins choisis parmi le lithium, le sodium et le potassium ;
M¹ et M² comprennent chacun un métal à l'état d'oxydation +4 choisi parmi le manganèse et/ou le titane et/ou le zirconium ;
dans laquelle
0 ≤ δ ≤ 0,1
X est dans la plage 0 ≤ X < 0,5 ; et
dans laquelle, en outre, quand X = 0 alors M¹ ≠ Mn ou Ti.

2. Composé selon la revendication 1 dans lequel X est dans la plage 0 ≤X ≤ 0.45.

3. Composé selon la revendication 1 dans lequel X est dans la plage 0,05 ≤ X 0,45.

4. Composé selon la revendication 1 dans lequel δ = 0,05.

5. Composé selon la revendication 1 répondant à la formule : NaNi_{0,5}Mn_{0,25}Zr_{0,25}O₂, NaNi_{0,5}Ti_{0,25}Zr_{0,25}O₂; NaNi_{0,5}Mn_{0,25}Ti_{0,25}O_{2;} NaNi_{0,5}Mn_{0,45}Zr_{0,05}O_{2;} NaNi_{0,5}Mn_{0,4}Zr_{0,1}O_{2;} NaNi_{0,5}Ti_{0,45}Zr_{0,05}O₂; NaNi_{0,5}Mn_{0,4}Zr_{0,1}O₂; NaNi_{0,5}Mn_{0,225}Ti_{0,225}Zr_{0,05}O₂ ; NaNi_{0,5}Mn_{0,2}Ti_{0,2}Zr_{0,1}O_{2;} ou NaNi_{0,5}Zr_{0,5}O₂.

6. Electrode comprenant un composé actif selon la revendication 1.

7. Electrode selon la revendication 6 utilisée conjointement avec une contre-électrode et un ou plusieurs matériaux électrolytiques.

8. Electrode selon la revendication 7 dans laquelle le matériau électrolytique comprend un matériau électrolytique aqueux.

9. Electrode selon la revendication 7 dans laquelle le matériau électrolytique comprend un électrolyte non aqueux.

10. Dispositif de stockage d'énergie comprenant une électrode selon la revendication 6.

11. Dispositif de stockage d'énergie selon la revendication 10 pouvant être utilisé à titre d'un ou de plusieurs des dispositifs suivants : une pile sodium-ion et/ou lithium-ion et/ou potassium-ion ; une pile ion métallique sodium et/ou métallique lithium et/ou métallique potassium ; une pile sodium-ion et/ou lithium-ion et/ou potassium-ion à électrolyte non aqueux ; et une pile sodium-ion et/ou lithium-ion et/ou potassium-ion à électrolyte aqueux.

12. Batterie rechargeable comprenant une électrode selon la revendication 6.

13. Dispositif électrochimique comprenant une électrode selon la revendication 6.

14. Dispositif électrochrome comprenant une électrode selon la revendication 6.

15. Procédé de préparation des composés selon la revendication 1 comprenant les étapes suivantes :
a) mélanger les matériaux de départ ;
b) chauffer les matériaux de départ mélangés dans un four à une température entre 400 et 1 500 °C, pendant 2 à 20 heures ; et
c) laisser le produit réactionnel refroidir.
